# EUROPEAN PATENT APPLICATION

(11) **EP 0 597 638 A1**
(43) Date of publication of application: **18.05.1994**
(21) Application number: 93308851.0
(22) Date of filing: 05.11.1993
(51) Int. Cl.: H04Q 7/04, H04B 7/26

(54) **Radio telecommunication systems and methods**

(30) Priority: 11.11.1992 GB 9223586
(71) Applicant: VODAFONE LIMITED, Newbury, Berkshire RG13 1JL (GB)
(72) Inventor: Beddoes, Edward William, Salisbury, Wiltshire, SP5 2HR (GB); McCombe, Michael John, Newbury, Berkshire, RG13 3DS (GB)
(74) Representative: Foster, David Martyn

(57) **Abstract**

A cellular telephone system has mobiles (M) which can move within and between cells (C), each of which has a respective base station (BS). The charging tariff applicable to each mobile depends on the area in which it is located. For example, each mobile may operate on a low rate tariff when in its own or local area and on a higher rate elsewhere. Each base station (BS) broadcasts an identifying signal on its control channel. Each mobile in the corresponding cell responds by displaying to the user an identification of the cell or corresponding area so that the user is made aware of the applicable tariff. Instead, an identification of the tariff itself can be displayed.

## Description

The invention relates to radio telecommunication systems and methods. Embodiments of the invention to be described in more detail below relate in particular to cellular telephone systems.

According to the invention, there is provided a cellular telephone system, including indicating means associated with each telephone to provide to the user thereof an indication dependent on the area in which the telephone is currently located.

According to the invention, there is also provided a mobile telephone for a cellular telephone system, comprising means responsive to a radio control signal received from a base station of a cell in which the telephone is operative in use to provide to the telephone user an indication dependent on the area in which the telephone is currently located.

According to the invention, there is further provided a method of operating a cellular telephone system, in which for each telephone the charging rate applicable to calls made therefrom depends on the area in which the telephone is currently located, and including the step of providing to the user of each telephone an indication dependent on the area in which the telephone is currently located.

Cellular telephone systems and methods according to the invention will now be described, by way of example only, with reference to the accompanying diagrammatic drawing in which:
Figure 1 is a block diagram of one of the systems; and
Figure 2 is a block diagram of part of one of the mobiles in the system.

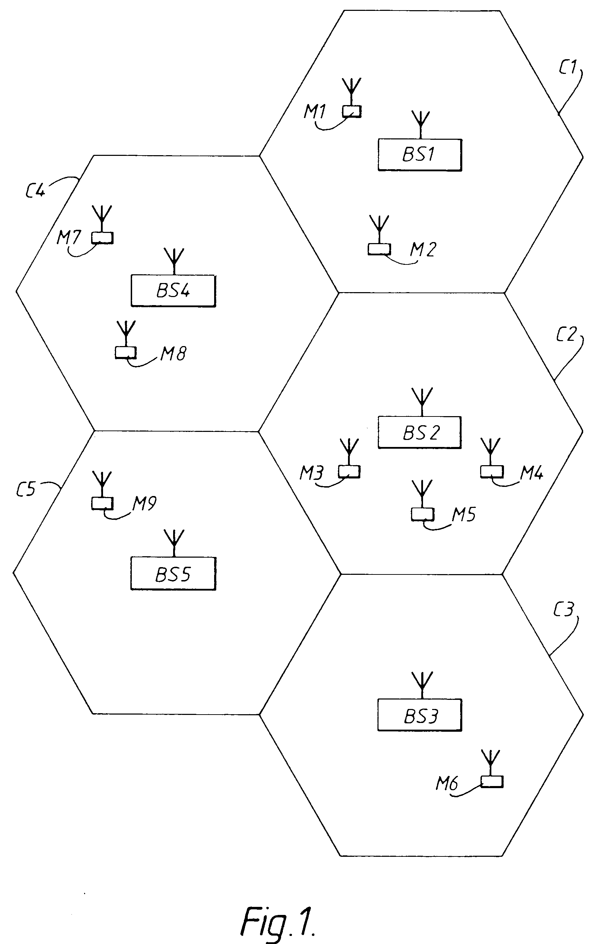

Figure 1 shows a cellular telephone system made up (in this example) of five cells C1,C2,C3,C4 and C5. Each cell has a respective base station BS1,BS2,BS3,BS4 and BS5 containing radio transmitting and receiving equipment by means of which mobile telephones (which can be hand-portable or fixed in vehicles for example), some of which are indicated at M1,M2,...., can establish telephonic communication with each other and with other telephones outside the system and to which the base stations are linked (such as by a land line or radio link); the other telephones outside the system may be part of a fixed PSTN. The mobiles may be hand-portable or carried by vehicles, for example.

In the normal way, each base station emits a broadcast signal on a predetermined control channel frequency and this is recognised by the mobiles within the cell of that base station and they correspondingly respond by signalling their identities back to the base station. The position of each mobile (that is, the cell in which it is currently located) is thus known and this information is sent by the respective base stations to a central control unit (not shown).

When a telephone call is to be made to a particular mobile, such as from a telephone in a connected PSTN or a mobile in another cell, the call is accordingly directed to the base station of the cell in which that particular mobile is currently located which thus in turn establishes the call with the mobile.

The area of each cell is therefore defined by the radio transmission and reception range of the corresponding base station. The area of each cell thus corresponds approximately to a defined geographical area though variations over time will occur due to factors which affect radio propagation from time to time. Moreover, for a particular mobile the effective area of the cell will also depend on its current transmission and reception characteristics - for example, the state of its battery.

The system may be analogue or digital in operation. Advantageously, however, it is a digital system such as a GSM system.

Such a system, and particularly (though not necessarily) for personal rather than business use, may be arranged to provide a variable tariff structure and, especially, a geographically variable tariff. In one example, each subscriber pays call charges at a relatively low rate within that subscriber's own local area and at a higher rate when outside that local area. The local area could be defined as the particular cell corresponding to that area or perhaps two or more such cells. In another example, each subscriber pays at a relatively low rate when in their own local area and in certain other specified areas, but at a higher rate elsewhere; the areas for which the low rate applies could, for example, be urban areas while the areas where a higher rate applies could be rural areas separating the urban areas.

In accordance with a feature of the system being described, the subscriber's mobile provides the subscriber with an indication, at least, of the area in which the mobile is currently located. This enables the subscriber to ascertain the applicable tariff before making a call.

Such identification is achieved by means of the control channel referred to above, which the base station in each cell broadcasts and to which the mobiles in that cell respond. By means of this control channel, each base station is arranged to broadcast a cell identifying signal and which causes a corresponding identification signal to be provided by the mobile to the subscriber. This identification signal would normally be a visual signal provided on the display of the mobile, but it could in principle be any other type of signal such as an audio signal.

The actual identification provided to the subscriber by the mobile could take any suitable form. For example, it could identify the area by name (e.g. the name of the town or city). Instead, it could identify the area in coded form, such as by means of the national telephone dialling code for that area, a post code or some other recognisable identification. From these identifications, the user is thus either able to recognise immediately the applicable tariff or can find this out by reference to information already to hand.

Means could be provided in the mobile for processing the identifying signal received from the base station so as to display an identification signal more directly related to the applicable tariff. Thus, the mobile would be programmed to respond to the identification signal by recognising the particular tariff to which it corresponded. In response to this, it would then display an appropriate indication - e.g. "TARIFF A" or "TARIFF B", or "LOCAL".

As is normal in a cellular system, mobiles which are moving during a call will be handed over from one base station to the base station of an adjacent cell when this is appropriate to enable the call to be continued. This could result in a different area identification signal being displayed. However, the system would normally be arranged so that no change in tariff would take place during the continuance of a call, the applicable tariff being dependent on the area in which the mobile was located when the call was initiated. During a call, a change in displayed identification signal could be inhibited.

The central control system, which will be programmed with details of each mobile and the tariffs applicable to it together with the corresponding areas relevant to each tariff level, will automatically record the duration of each call made by a particular mobile and the relevant tariff applicable to each such call for subsequent charging purposes.

Within each cell, each base station has a limited number of radio transmission and reception channels by means of which calls take place (after having been set up by means of the control channel). At busy times, therefore, most or all of the available calling channels may be occupied. The system may be arranged to monitor continuously the occupancy of the calling channels and to adjust the applicable tariff or the applicable tariff charge accordingly - so as, for example, to increase the applicable charge when the calling channels are mostly or wholly occupied. In response to such adjustment, the base station can be rendered operative to alter the identification signal transmitted to the mobiles within its cell so as to indicate the change in charging rate. The users will thus become aware of the higher charging rate and can then decide whether to delay less urgent calls until less busy times. In this way, more economic usage of the system can be obtained.

The system may provide lower charging rates at off-peak times of the day or on off-peak days (such as at weekends). The system can be arranged so that the mobiles display a corresponding indication.

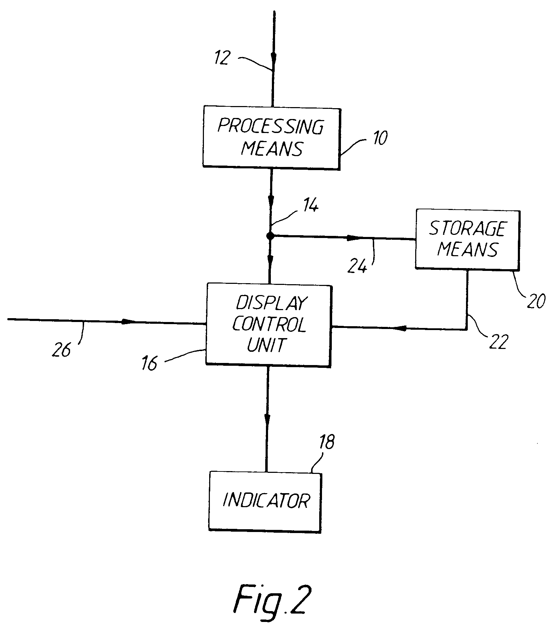

Figure 2 illustrates the foregoing in more detail and in block diagram form. As shown in Figure 2, a mobile has processing means 10 which receives, on a line 12, the signal transmitted on the control channel by the base station of the cell in which the mobile is located. The signal on the line 10 is received from the radio receiving circuitry (not shown) of the mobile. The processing unit 10 decodes that part of the control signal identifying the cell or geographical area in which the mobile is located and produces a corresponding geographical indicating signal on a line 14 which is fed to a display control unit 16. The control unit 16 produces a corresponding display on a visual indicator 18 in the manner already explained. The mobile may incorporate storage means 20 which stores information concerning applicable tariff rates - such as different tariff rates which apply at different times of day or days of the week, for example. This information is read out on a line 22 to the display control unit 16 so as to produce an appropriate display on the display indicator 18. As explained above, the applicable tariff will also depend on the geographical area in which the mobile is located. Therefore, the identification signal on line 14 may also be fed to the tariff store 20 by means of a line 24 so as to cause an appropriate tariff-indicating signal to be fed out of the store on the line 22.

Figure 2 does not illustrate the circuitry within the mobile for making and receiving calls. A line 26 from this circuitry carries an inhibit signal which is produced during hand-over of a call from one cell to another, and the signal on line 26 inhibits the display control unit 16 from altering the display when such hand-over takes place.

## Claims

1. A cellular telephone system, characterised by indicating means (18) associated with each telephone (e.g. M1) to provide to the user thereof an indication dependent on the area in which the telephone (e.g. M1) is currently located.

2. A system according to claim 1, characterised by a base station (e.g. BS1) associated with each cell (e.g. C1) of the system, and means in each base station (e.g. BS1) for transmitting radio signals on a control channel, the transmitted radio signals including an identifying signal dependent on the identity of the particular cell (e.g. C1), and in that each telephone (e.g. M1) includes means (10,16) for receiving and responding to the control signals, the said indicating means (18) including means responsive to the identifying signal.

3. A system according to claim 2, characterised in that the radio signals include signals for use in setting up telephone calls between the base station (e.g. BS1) and the telephones (e.g. M1) in that cell (e.g. C1).

4. A system according to any preceding claim, characterised by means responsive to the number of telephone calls being made at any time with telephones within each cell (e.g. C1) and for comparing this number with the maximum capacity available in that cell (e.g. C1) to assess the degree of congestion in the cell, and means operative when the degree of congestion within the cell (e.g. C1) exceeds a predetermined value to vary the said indication provided by the indicating means (18) associated with at least particular telephones (e.g. M1) within that cell.

5. A system according to claim 4, characterised by means operative when the degree of congestion exceeds the predetermined value to increase the charging rate applicable to calls made by the said particular telephones (e.g. M1).

6. A mobile telephone for a cellular telephone system, characterised by means (e.g. 10,16,18) responsive to a radio control signal received from a base station (e.g. BS1) of a cell (e.g. C1) in which the telephone (e.g. M1) is operative in use to provide to the telephone user an indication dependent on the area in which the telephone (e.g. M1) is currently located.

7. A system or telephone according to any preceding claim, characterised by means (20) operative in response to the current time of day and/or day of the week to vary the charging rate applicable to calls made by telephones (e.g. M1) in each cell (e.g. C1) and to vary the said indication correspondingly.

8. A system or telephone according to any preceding claim, characterised in that the indication is a visual indication.

9. A system or telephone according to any one of claims 1 to 7, characterised in that the indication is an audio indication.

10. A system or telephone according to any preceding claim, characterised in that the indication indicates the charging rate applicable to calls made from the telephone (e.g. M1).

11. A system or telephone according to any preceding claim, characterised in that the indication is dependent on the particular cell (e.g. C1) in which the telephone (e.g. M1) is currently located.

12. A method of operating a cellular telephone system, characterised in that for each telephone (e.g. M1) the charging rate applicable to calls made thereby depends on the area (e.g. C1) in which the telephone (e.g. M1) is currently located, and by the step of providing to the user of each telephone (e.g. M1) an indication (e.g. 18) dependent on the area (e.g. C1) in which the telephone (e.g. M1) is currently located.

13. A method according to claim 12, characterised in that the step of producing the said indication comprises the step of producing it visually.

14. A method according to claim 12, characterised in that the step of producing the said indication comprises the step of producing it audibly.

15. A method according to any one of claims 12 to 14, characterised in that the step of providing the said indication (e.g. 18) to the user of each telephone (e.g. M1) comprises the step of causing the base station (e.g. BS1) of the cell (e.g. C1) in which the telephone (e.g. M1) is currently located to broadcast a control signal including an identifying signal dependent on that cell (e.g. C1).

16. A method according to any one of claims 12 to 15, characterised by the steps of varying the charging rate applicable to a particular telephone (e.g. M1) according to the degree of congestion in the cell (e.g. C1) in which that telephone (e.g. M1) is located, and by the step of varying the said indication correspondingly.
